(19) Europäisches Patentamt / European Patent Office / Office européen des brevets

(11) **EP 4 734 020 A1**

(12) **EUROPEAN PATENT APPLICATION**
published in accordance with Art. 153(4) EPC

(43) Date of publication:
29.04.2026 Bulletin 2026/18

(21) Application number: 24835341.9

(22) Date of filing: 02.07.2024

(51) International Patent Classification (IPC):
*G06Q 10/04* (2023.01)  *F24F 11/00* (2018.01)

(52) Cooperative Patent Classification (CPC):
G06Q 10/04; G06Q 10/0631; G06Q 10/0639;
G06Q 50/26; F24F 2110/00

(86) International application number:
PCT/CN2024/103165

(87) International publication number:
WO 2025/007860 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.07.2023 CN 202310820243

(71) Applicant: ZTE CORPORATION
Shenzhen, Guangdong 518057 (CN)

(72) Inventors:
• LIU, Lixia
Shenzhen, Guangdong 518057 (CN)

• MO, Tao
Shenzhen, Guangdong 518057 (CN)
• HOU, Chunhua
Shenzhen, Guangdong 518057 (CN)
• LIU, Ming
Shenzhen, Guangdong 518057 (CN)
• DOU, Xiao
Shenzhen, Guangdong 518057 (CN)
• YANG, Yao
Shenzhen, Guangdong 518057 (CN)

(74) Representative: **Ziebig Hengelhaupt Intellectual Property Attorneys**
**Patentanwaltskanzlei PartGmbB**
**Leipziger Straße 49**
**10117 Berlin (DE)**

(54) **ENERGY CONSUMPTION GRADING OPTIMIZATION METHOD, COMPUTER DEVICE, AND STORAGE MEDIUM**

(57) The present application relates to the field of energy, and specifically to an energy consumption grading optimization method, a computer device, and a storage medium. The method comprises: acquiring target operation data related to energy consumption optimization; performing data grading on the target operation data to obtain data sets corresponding to optimization levels, wherein the data sets of different optimization levels correspond to different optimization indexes; determining an initial optimization level on the basis of a device operation mechanism and a current state indicated by the target operation data; and using the initial optimization level as an optimization starting point, and performing grading optimization calculation on the basis of optimization models of the optimization levels and the data sets corresponding to the optimization levels to obtain a target energy consumption optimization strategy, so as to optimize the energy consumption of a heating and ventilation device on the basis of the target energy consumption optimization strategy.

FIG. 1

## Description

CROSS-REFERENCE TO RELATED APPLICATIONS

The present application claims priority to Chinese Patent Application No. 202310820243.9 filed on July 5, 2023 to the CNIPA, and entitled "ENERGY CONSUMPTION GRADING OPTIMIZATION METHOD, COMPUTER DEVICE, AND STORAGE MEDIUM", the entire content of which is incorporated herein by reference.

TECHNICAL FIELD

Embodiments of the present application relate to the field of energy, in particular to an energy consumption grading optimization method, a computer device, and a storage medium.

BACKGROUND

Reducing carbon emissions is an important means of environmental protection. In some scenarios (e.g., a data center) where heating devices are applied, energy consumption may be reduced by optimizing a control strategy of a heating and ventilation device, so as to reduce the carbon emissions.

In the related art, a way to optimize a control strategy of a heating and ventilation device is mainly to directly establish an energy consumption prediction model between operation data related to energy consumption optimization and electric energy usage effectiveness through machine learning or deep learning. The operation data related to the energy consumption optimization include outdoor environment data, and key measurement point data of the heating and ventilation device and an IT device. If the predicted electric energy usage effectiveness is lower than the original electric energy usage effectiveness, a combination of input parameters of the model is considered to be an effective energy consumption optimization method.

However, the above optimization method belongs to the pure data-driven model, which may theoretically achieve a better energy consumption optimization effect, but implementation in practice may lead to a problem of frequent starting and stopping of the devices due to frequent adjustment of control parameters, or the inconsistency with actual operation and maintenance logic due to an excessive difference of the parameters, which makes the practicability of the energy consumption optimization method lower.

SUMMARY

Embodiments of the present application provide an energy consumption grading optimization method, a computer device, and a storage medium, which can improve the optimization efficiency as well as improve the practicability of an energy consumption optimization strategy. Technical solutions are as follows.

In an aspect, an energy consumption grading optimization method is provided. The method includes: acquiring target operation data related to energy consumption optimization; performing data grading on the target operation data to obtain data sets corresponding to optimization levels, wherein data sets of different optimization levels correspond to different optimization indexes; determining an initial optimization level on the basis of a device operation mechanism and a current state indicated by the target operation data; and, and performing, by using the initial optimization level as an optimization starting point and on the basis of optimization models of optimization levels and the data sets corresponding to optimization levels, grading optimization calculation to obtain a target energy consumption optimization strategy, so as to optimize energy consumption of a heating and ventilation device on the basis of the target energy consumption optimization strategy.

In another aspect, a computer device is provided. The computer device contains a processor and a memory. The memory stores at least one computer program. The at least one computer program is loaded and executed by the processor to implement the above energy consumption grading optimization method.

In another aspect, a readable storage medium is provided. The readable storage medium stores at least one computer program therein. The computer program is loaded and executed by a processor to implement the above energy consumption grading optimization method.

In another aspect, a computer program product is provided. The computer program product includes at least one computer program. The computer program is loaded and executed by a processor to implement the energy consumption grading optimization method provided in various optional implementations above.

BRIEF DESCRIPTION OF DRAWING(S)

Accompanying drawings here are incorporated into the specification, constitute a part of the specification, show embodiments consistent with the present application, and are used to explain a principle of the present application together with the specification.

FIG. 1 shows a flowchart of an energy consumption grading optimization method provided by an exemplary embodiment of the present application.
FIG. 2 shows a flowchart of an energy consumption grading optimization method provided by an exemplary embodiment of the present application.
FIG. 3 shows a flowchart of an energy consumption grading optimization method provided by an exemplary embodiment of the present application.
FIG. 4 shows a schematic diagram of an energy consumption grading optimization system provided by an exemplary embodiment of the present application.

FIG. 5 shows a structural block diagram of a computer device showed by an exemplary embodiment of the present application.

DETAILED DESCRIPTION

Exemplary embodiments will be illustrated in detail here, and their examples are shown in accompanying drawings. When the following description refers to the accompanying drawings, unless otherwise indicated, the same numbers in different accompanying drawings indicate the same or similar elements. Implementations described in the following exemplary embodiments do not represent all implementations consistent with the present application. Rather, they are merely examples of apparatuses and methods consistent with some aspects of the present application as detailed in the appended claims.

In a scenario with a heating and ventilation device, a purpose of energy saving and energy consumption reduction may be achieved by optimizing energy consumption of the heating and ventilation device. Exemplarily, energy saving and energy consumption reduction may be achieved by optimizing the energy consumption of the heating and ventilation device. At the present stage, the formulation of an energy consumption optimization strategy of the heating and ventilation device has the following problems.

(1) Without considering a relationship between control parameters of the heating and ventilation device, all the control parameters are treated equally (e.g., the operation quantity of devices and internal control parameters of the device are adjusted equally in each time of optimization), and change of an output control parameter (especially a difference in the operation quantity of the devices) leads to frequent starting and stopping of the device, which is not in line with the maintenance of the machine in actual operation and maintenance.

(2) It is not considered that a combination (i.e., an operation mode) of types of the heating and ventilation device is also different according to a climate change and a corresponding internal control parameter of the device, resulting in that an internal control parameter given by an existing model is greatly different from the parameter setting logic of current actual operation and maintenance of the existing device, which is difficult to be credibly accepted.

(3) Security and validity are not fully considered in a modeling process in combination with the actual operation and maintenance, which leads to low credibility of an optimization control strategy output by the model during subsequent issuance.

(4) A huge difference between actual collected messy data and simulated ideal data is not considered, and the actual collected data has a large number of problems such as more missing data, inconsistency between a device state index and device frequency feedback, and a data collection abnormality, which needs grading processing and a correctness check in combination with a device operation mechanism. If effective data grading processing is not performed, it may lead to lower accuracy of the model and an invalid subsequent application.

In response to the above problems, embodiments of the present application provide an energy consumption grading optimization method, which can solve all or part of the above problems, improving the practicality of an energy consumption optimization strategy while optimizing energy consumption. The energy consumption grading optimization method of the present application is introduced below by means of several embodiments.

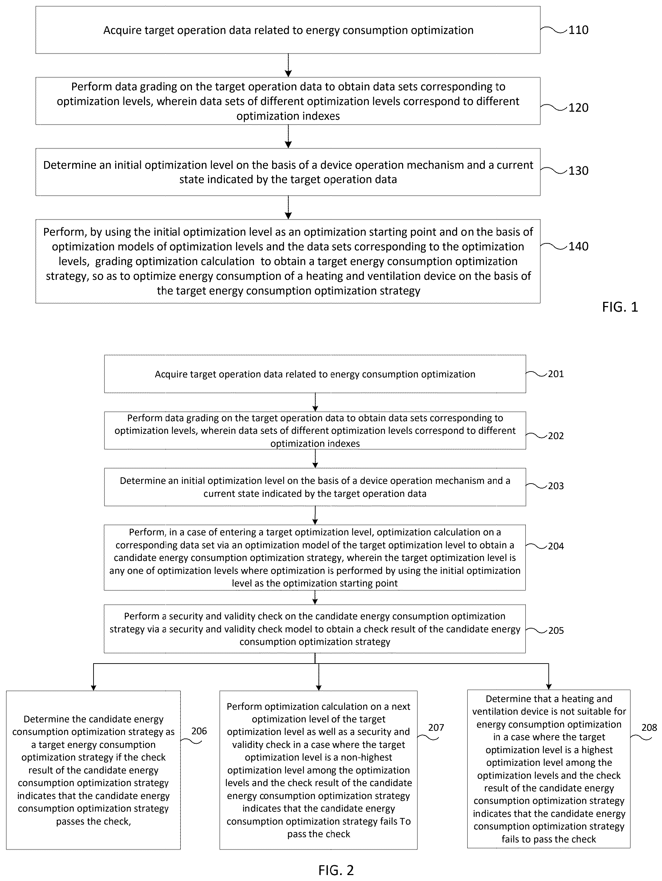

FIG. 1 shows a flowchart of an energy consumption grading optimization method provided by an exemplary embodiment of the present application. The method may be performed by a computer device. The computer device may be implemented as a management device of a heating and ventilation device. As shown in FIG. 1, the energy consumption grading optimization method may include the following steps.

At Step 110, target operation data related to energy consumption optimization is acquired.

In the embodiment of the present application, the target operation data related to the energy consumption optimization may include temperature and humidity of in different indoor and outdoor stages, device energy consumption of various heating and ventilation devices, state information of key components of the heating and ventilation devices, control parameters, etc. The target operation data may be obtained by the computer device by monitoring each heating and ventilation device.

At Step 120, data grading is performed on the target operation data to obtain data sets corresponding to optimization levels, where data sets of different optimization levels correspond to different optimization indexes.

When an energy consumption optimization strategy is formulated on the basis of the target operation data, data grading is first performed on the target operation data according to the optimization indexes corresponding to the optimization levels, so as to obtain the data sets corresponding to the optimization levels. Different optimization levels correspond to different optimization indexes, consequently, the different optimization indexes related to different optimization levels are different in the numbers and types, and the optimization indexes related to different optimization levels may be partially the same or completely different. Exemplarily, one optimization level may involve an optimization index A, and another optimization level may involve an optimization index A as well as an optimization index B. The number of optimization levels as well as settings of optimization indexes involved in the optimization levels may be set by relevant personnel on the basis of actual needs, which is not limited in the present application.

At Step 130, an initial optimization level is determined on the basis of a device operation mechanism and a current state indicated by the target operation data.

In the embodiment of the present application, there may be a level relationship among the optimization levels, i.e., in a process of formulating the energy consumption optimization strategy, the computer device may perform optimization calculation level by level according to the level relationship among the optimization levels. Therefore, in order to avoid a meaningless optimization calculation process, the computer device may first determine the initial optimization level in the current state according to the device operation mechanism as well as the current state indicated by the target operation data, so as to determine optimization starting points in the optimization levels.

At Step 140, On the basis of optimization models of optimization levels and data sets corresponding to the optimization levels, grading optimization calculation is performed by using the initial optimization level as the optimization starting point to obtain a target energy consumption optimization strategy, so as to optimize energy consumption of the heating and ventilation device on the basis of the target energy consumption optimization strategy.

Exemplarily, if four optimization levels with a level relationship are configured, and the initial optimization level determined on the basis of the device operation mechanism as well as the current state indicated by the target operation data is the second optimization level, the first optimization level may be skipped in the formulation of the energy consumption optimization strategy. Starting from the second optimization level, grading optimization calculation and check are performed until the target energy consumption optimization strategy is obtained or all the optimization levels are traversed. The formulation of the energy consumption optimization strategy on the basis of different optimization indexes may be achieved through grading optimization. By determining the initial optimization level, unnecessary optimization calculations and check processes may be avoided, thereby improving the efficiency of the formulation of the energy consumption optimization strategy as well as improving the applicability of the energy consumption optimization strategy to the current state.

When optimization calculation is performed in each optimization level, optimization calculation is performed on the data set of the optimization level via the optimization model of the optimization level, so as to acquire an optimization result of the optimization level, i.e., the energy consumption optimization strategy of the optimization level. In a possible implementation, the computer device may directly determine the energy consumption optimization strategy obtained for the optimization level as the target energy consumption optimization strategy. Or, in another possible implementation, the computer device may determine the energy consumption optimization strategy as the target energy consumption optimization strategy when the energy consumption optimization strategy meets specified conditions.

In summary, in the energy consumption grading optimization method provided by the embodiment of the present application, the target operation data related to the energy consumption optimization is acquired, data grading is performed on the target operation data to obtain the data sets of the optimization levels corresponding to different optimization indexes, after the initial optimization level is determined on the basis of the device operation mechanism and the current state grading optimization calculation is performed by using the initial optimization level of each optimization level as the optimization starting point and on the basis of the optimization models of the optimization levels and the data sets of the optimization levels so as to obtain the target energy consumption optimization strategy that meets current actual needs, and the energy consumption of the heating and ventilation device is optimized on the basis of the target energy consumption optimization strategy. Through the above method, the initial optimization level adapted to the device operation mechanism and the current state can be determined, so as to perform grading optimization on the basis of the initial optimization level as the grading optimization starting point to formulate the energy consumption optimization strategy, unnecessary optimization processes can be avoided, and the optimization efficiency is improved. In addition, the practicality of the energy consumption optimization strategy is improved because the obtained target energy consumption optimization strategy is adapted to the current state and the device operation mechanism.

In a possible implementation, when the energy consumption optimization strategy output from the optimization level passes a security and validity check, the energy consumption optimization strategy is determined as the target energy consumption optimization strategy. In the embodiment of the present application, the computer device may achieve the security and validity check on the energy consumption optimization strategy via a security and validity check model. In this case, FIG. 2 shows a flowchart of an energy consumption grading optimization method provided by an exemplary embodiment of the present application. The method may be performed by a computer device. The computer device may be implemented as a management device of a heating and ventilation device. As shown in FIG. 2, the energy consumption grading optimization method may include the following steps.

At Step 201, target operation data related to energy consumption optimization is acquired.

The computer device may acquire real operation data acquired from a real data center as the target operation data, and the real data center may include an IT center as well as a supervision system (SS). In the embodiment of the present application, the target operation data may include indoor and outdoor temperature, indoor and outdoor humidity as well as a change situation of an information technology (IT) load. The target operation data is used to indicate a current state.

At Step 202, data grading is performed on the target operation data to obtain data sets corresponding to optimization levels, wherein data sets of different optimization levels correspond to different optimization indexes.

The computer device may perform data grading on the target operation data by a data grading processing module, to obtain the data sets corresponding to the optimization levels. The process may include the following.

Data grading cleaning, data grading check, index grading fusion, index grading extraction, and index grading division are performed on the target operation data to obtain a data set applied to a control strategy grading optimization model. The control strategy grading optimization model includes optimization models of optimization levels. The data set applied to the control strategy grading optimization model includes data subsets applied to the optimization models of the optimization levels.

In the process of data grading, data grading cleaning is used to clean redundant data from the target operation data, such as checking the data consistency, and dealing with invalid values and missing values.

Data grading check is used to check the correctness of each piece of data. The data grading check may check whether there is any abnormality in data collection of each device on the basis of business logic. When it is determined that there is an abnormality, whether this part of abnormality belongs to a device failure or a data collection error is determined, and the size of this part of abnormal data is counted, and on such basis, corresponding data correction or data removal measures may be taken on the basis of pre-specified data correctness extraction logic. Exemplarily, when data grading check is based on the business logic of a chilled water refrigeration system, it is necessary to determine whether a cooling pump, a refrigeration primary pump, and a water cooler or a plate exchanger in a water chilling unit meet a condition of being turned on and off simultaneously, so as to determine whether there is any abnormality in data collection of the devices corresponding to the chilled water refrigeration system. For example, if a device state bit of a certain device shows that the device is off, but a frequency or a current percentage of the device has a value showing that the device is on, it is determined that there is an abnormality.

The index grading fusion is used to perform data statistics on relevant indexes to generate a new index. Exemplarily, the computer device judges a real turn-on situation of the device (i.e., the new index) via a state index, a control index, and a control feedback index of the device. In addition, the index grading fusion may further be implemented as performing statistics of an operation quantity, generation of temperature and humidity mean values, generation of a current percentage mean value, generation of a frequency feedback mean value, etc. on the same type of device.

The index grading extraction is used to extract index sets needed by different models to form corresponding data subsets. Exemplarily, a data subset Data_E applied to an energy consumption validity check model contains indexes related to energy consumption, such as an index related to power usage effectiveness (PUE) or a cooling load factor (CLF). The PUE is a ratio of all energy consumed to energy used by the IT load. The CLF is a ratio of power consumed by a cooling device to power consumed by an IT device. A data subset Data_C applied to a cooling capacity security check model contains indexes related to a cooling capacity Cooling. A data subset Data_S applied to a state security check contains indexes related to a temperature and pressure state. The data subsets of the optimization levels needed by the control strategy grading optimization model contain indexes related to a current optimization level.

The index grading division is used for divide different indexes by type. Exemplarily, the optimization indexes may be divided into different types on the basis of index types, index functions, etc. For example, with the index types as a division basis, the indexes may be divided into an environment index, a device operation state index, a device control feedback index, a device control parameter setting index, various energy consumption indexes, etc. With the index functions as a division basis, the indexes may be divided into indexes related to a security check, indexes related to a validity check, indexes related to strategy grading optimization, etc. By performing the grading division of the indexes, iterations and corrections of a data grading processing process may be facilitated.

In one embodiment, prior to performing data grading on the target operation data to obtain the data sets corresponding to optimization levels, the method further includes that: optimization pre-detection is performed on the target operation data via an optimization pre-detection index to obtain an optimization pre-detection result, where the optimization pre-detection index includes at least one of the following: checking whether indexes needed by the models are missing, or checking whether a business relationship between the indexes is valid; and when the optimization pre-detection result indicates that the target operation data passes the pre-detection, data grading is performed on the target operation data to obtain the data sets corresponding to the optimization levels.

In other words, when entering into an online inference flow of energy consumption grading optimization, the optimization pre-detection is first performed on the target operation data, and after the target operation data passes the optimization pre-detection, a subsequent processing process is performed. Checking whether the indexes needed by the models are missing may be checking whether indoor and outdoor environment temperatures, a device operation state, device control feedback, a device setting parameter, etc. are missing in a large scale. Checking whether the business relationship between the indexes is valid may be checking whether states of the devices of the water chilling unit conform to being turned on and off simultaneously, etc.

When the optimization pre-detection result indicates that the target operation data fails to pass pre-detection, it is determined that the heating and ventilation device is not suitable for energy consumption optimization.

When the optimization pre-detection result indicates that the target operation data fails to pass pre-detection, it means that there may be a device failure or a problem with data collection, it is determined that the heating and ventilation device is not suitable for energy consumption optimization, and a subsequent flow is not started temporarily. In one embodiment, in this case, an indication of "not suitable for optimization" may further be given via audio information or visual information, e.g., by emitting a prompt tone or by displaying text or image prompt information on a display device.

At Step 203, an initial optimization level is determined on the basis of a device operation mechanism and a current state indicated by the target operation data.

Exemplarily, taking a configuration of three optimization levels, respectively a first optimization level, a second optimization level, and a third optimization level, in the computer device as an example, there is a level relationship among the three optimization levels. When grading optimization calculation is performed, if the initial optimization level is the first optimization level, optimization is performed in the order from the first optimization level to the third optimization level. Optimization indexes of the three optimization levels are different, wherein the first optimization level refers to performing optimization on an internal control parameter of the heating and ventilation device; the second optimization level refers to performing optimization on an operation quantity and the internal control parameter of the heating and ventilation device; and the third optimization level refers to performing optimization on an operation mode, the operation quantity and the internal control parameter of the heating and ventilation device. The operation mode reflects a combination mode of the device, e.g., the chilled water refrigeration device is divided into a free mode, a precooling mode, a refrigeration mode, etc., on the basis of which the embodiment of the present application provides a feasible way of determining the initial optimization level on the basis of a climate change. A process of determining the initial optimization level by the computer device may be implemented as the following.

In a case where the outdoor temperature is within a preset outdoor temperature range, indoor-and-outdoor temperature and humidity changes periodically and an IT load changes periodically, the initial optimization level is determined to be the first optimization level, wherein the first optimization level indicates that optimization is performed on the internal control parameter of the heating and ventilation device.

In a case where the outdoor temperature is within the outdoor temperature range, and the indoor-and-outdoor temperature and humidity has a sudden change or the IT load has a sudden change, the initial optimization level is determined to be the second optimization level, wherein the second optimization level indicates that optimization is performed on the operation quantity and the internal control parameter of the heating and ventilation device. In a case where the outdoor temperature is in a temperature critical range between different outdoor temperature ranges, the initial optimization level is determined to be the third optimization level, wherein the third optimization level indicates that optimization is performed on the operation mode, the operation quantity and the internal control parameter of the heating and ventilation device.

In other words, the optimization index of the first optimization level is the internal control parameter of the heating and ventilation device; the optimization indexes of the second optimization level are the operation quantity and the internal control parameter of the heating and ventilation device; and the optimization indexes of the third optimization level are the operation mode, the operation quantity and the internal control parameter of the heating and ventilation device.

When the outdoor temperature is in the preset outdoor temperature range, it means that the climate does not change significantly. The preset outdoor temperature range may be set on the basis of seasons respectively. For example, the outdoor temperature range in winter may be $T \leq 10$, the outdoor temperature range in spring and fall may be $10 < T \leq 26$, and the outdoor temperature range in summer may be $T > 26$. It needs to be noted that the above settings for the outdoor temperature range are only exemplary, and on the basis of differences in actual situations, the outdoor temperature range may also have different settings, which is not limited in the present application. When the climate does not change significantly and the indoor-and-outdoor temperature and humidity and the IT load are in periodic changes, energy consumption optimization selects an optimization mode, in which the operation mode and the device operation quantity of the heating and ventilation device are not adjusted but the internal control parameter of the heating and ventilation device is optimized, i.e., an optimization calculation process with the first optimization level as the initial optimization level is performed.

When the outdoor temperature is in the outdoor temperature range, i.e., the climate does not change significantly, the change situation of the indoor and outdoor temperature and humidity indicates that the indoor and outdoor temperature and humidity have a sudden change, or the change situation of the IT load indicates that the IT load has a sudden change, energy consumption optimization selects an optimization mode, in which the operation mode of the heating and ventilation device is not adjusted but the operation quantity and the device internal control parameter of the heating and ventilation device are optimized , i.e., an optimization calculation process with the second optimization level as the initial optimization level is performed. In one embodiment, the computer device may perform the optimization calculation process with the second optimization level as the initial optimization level when the climate does not change significantly, the indoor and outdoor temperature and humidity have a sudden change and exceed a specified ratio threshold within a specified time interval, or the IT load has a sudden change and exceeds a specified ratio threshold over a period of time. For example, if the outdoor temperature is in the outdoor temperature range and the IT load has a sudden change and changes by more than 50% within 4 hours, it is determined to perform the optimization calculation process with the second optimization level as the initial optimization level. The specified time interval and the specified ratio threshold may be both set on the basis of actual needs, which is not limited in the present application.

In a case where the outdoor temperature is in a temperature critical range between different outdoor temperature ranges, i.e., the climate is in a season switching state, e.g., setting the outdoor temperature ranges on the basis of seasons as mentioned above, it is determined that the climate is in the season switching state when an outdoor air temperature T is around 10 or around 26. At this point, a priority is given to selecting an optimization mode that the operation mode of the heating and ventilation device, the operation quantity of the heating and ventilation device, and the internal control parameter of the device are optimized, i.e., an optimization calculation process with the third optimization level as the initial optimization level is performed.

It needs to be noted that the above division of optimization levels and the setting of climate conditions when each optimization level is used as the initial optimization level are only a feasible mode of division and setting provided by the embodiment of the present application, and relevant personnel may set more or fewer optimization levels on the basis of actual needs and set corresponding climate conditions, which is not limited in the present application.

At Step 204, in a case of entering a target optimization level, optimization calculation is performed on a corresponding data set by utilizing an optimization model of the target optimization level to obtain a candidate energy consumption optimization strategy, wherein the target optimization level is any one of the optimization levels where optimization is performed by using the initial optimization level as the optimization starting point.

In the grading optimization process, the computer device starts the optimization process with the initial optimization level as the optimization starting point, and ends the optimization process with obtaining the target energy consumption optimization strategy or traversing all the optimization levels as an optimization end point. In the process of performing grading optimization with the determined initial optimization level as the optimization starting point, in order to further improve the practicability of the obtained energy consumption optimization strategy, a security and validity check is performed on each energy consumption optimization strategy obtained for the optimization level, and whether the energy consumption optimization strategy is the target energy consumption optimization strategy is determined on the basis of a check result.

At Step 205, a security and validity check is performed on the candidate energy consumption optimization strategy via a security and validity check model to obtain a check result of the candidate energy consumption optimization strategy.

In the embodiment of the present application, the security and validity check on the energy consumption optimization strategy performed by the computer device may include: an energy consumption validity check, a cooling capacity security check, and an application state security check. Correspondingly, the security and validity check model may include: an energy consumption validity check model, a cooling capacity security check model, and an application state security check model.

Performing the security and validity check on the energy consumption optimization strategy obtained by the optimization model via the security and validity check model includes that: energy consumption validity check is performed on the energy consumption optimization strategy via the energy consumption validity check model to obtain a first sub-check result; cooling capacity security check is performed on the energy consumption optimization strategy via the cooling capacity security check model to obtain a second sub-check result; state security check is performed on the energy consumption optimization strategy via the state security check model to obtain a third sub-check result; and a check result is generated on the basis of the first sub-check result, the second sub-check result, and the third sub-check result, wherein the check result indicates that the energy consumption optimization strategy passes the check or fails to pass the check.

Each sub-check result may be a predicted value of a check index of the corresponding model, and whether the check of the corresponding model is passed is determined by determining whether the predicted value of the corresponding check index satisfies a check condition of the corresponding check index. Exemplarily, performing the energy consumption validity check on the energy consumption optimization strategy by the energy consumption validity check model may refer to inputting data corresponding to the energy consumption validity check in the energy consumption optimization strategy into the energy consumption validity check model to obtain the first sub-check result of the energy consumption validity check model, i.e., a predicted value of electric energy utilization effectiveness under the energy consumption optimization strategy. If the first sub-check result meets check conditions for the electric energy utilization effectiveness, it is determined that the energy consumption validity check is passed. If the first sub-check result does not meet the check conditions for the electric energy utilization effectiveness, it is determined that the energy consumption validity check is failed. The check process for other sub-check results indicating whether a check is passed may refer to the above description and will not be repeated here.

At Step 206, if the check result of the candidate energy consumption optimization strategy indicates that the candidate energy consumption optimization strategy passes the check, the candidate energy consumption optimization strategy is determined as the target energy consumption optimization strategy.

In one possible implementation, when the first sub-check result, the second sub-check result, and the third sub-check result all indicate that the check is passed, it is determined that the check result indicates that the energy consumption optimization strategy passes the check. When there is a sub-check result indicating that the check is failed in the first sub-check result, the second sub-check result, and the third sub-check result, it is determined that the check result indicates that the energy depletion optimization strategy fails the check. In one embodiment, the computer device may also set a check ratio threshold to determine that the check result indicates that the energy consumption optimization strategy passes the check when a ratio of the number of sub-check results indicating that the check is passed to the total number of sub-check results is greater than the check ratio threshold, and otherwise, determine that the check result indicates that the energy consumption optimization strategy fails the check. A value of the check ratio threshold may be set on the basis of actual needs, which is not limited in the present application. Exemplarily, in an example of determining that the check result indicates that the energy consumption optimization strategy passes the check when the first sub-check result, the second sub-check result, and the third sub-check result all indicate that the check is passed, the above process of the security and validity check on the energy consumption optimization strategy may be represented as:

OptimalControls=Model_x*(Data_new)
(max(CurrentEnergy-Model_E(OptimalControls))/-CurrentEnergy)&
(Model_C(OptimalControls)>=CurrentNeeded-Cooling)&(MinSafeState<=Model_S(OptimalControls)<=MaxSafeState)

where OptimalControls represents a target energy consumption optimization strategy, Model_x represents an x-th optimization level, Data_new represents target operation data, CurrentEnergy represents current energy consumption, CurrentNeeded-Cooling represents a current cooling capacity, Min-SafeState represents a minimum value of state security, and MaxSafeState represents a maximum value of the security state. It needs to be noted that the above settings of the check conditions for the check indexes are only exemplary, and other check conditions may be set on the basis of actual needs, which is not limited in the present application.

In the grading optimization process, a situation where the energy consumption optimization strategy of the current optimization level does not pass the security and validity check is as follows.:

At step 207, in a case where the target optimization level is a non-highest optimization level among the optimization levels and the check result of the candidate energy consumption optimization strategy indicates that the candidate energy consumption optimization strategy fails to pass the check, optimization calculation on a next optimization level of the target optimization level as well as a security and validity check is performed.

At Step 208, in a case where the target optimization level is a highest optimization level among the optimization levels and the check result of the candidate energy consumption optimization strategy indicates that the candidate energy consumption optimization strategy fails to pass the check, it is determined that the heating and ventilation device is not suitable for energy consumption optimization.

In other words, when there is an optimization level higher than the target optimization level, and the target energy consumption optimization strategy cannot not acquired on the basis of the target optimization level, an optimization process for a next optimization level is performed. Exemplarily, after the optimization calculation by utilizing an optimization model of an N-th optimization level and the security and validity check are performed, if an acquired energy consumption optimization strategy passes the check, the energy consumption optimization strategy is determined as the target energy consumption optimization strategy and output, and the grading optimization process is ended. If the acquired energy consumption optimization strategy fails to pass the check, an optimization model of an (N+1)-th optimization level is utilized to continue the optimization calculation and the security and validity check until the target energy consumption optimization strategy is acquired or all the optimization levels are traversed, and N is a positive integer. When a target energy consumption optimization strategy is not acquired after all the optimization levels are traversed, it is determined that the current heating and ventilation device is not suitable for energy consumption optimization, and a corresponding prompt is output.

Since the process of performing optimization on an optimization level is a process of adjusting a parameter corresponding to each optimization index in the data set corresponding to the optimization level to achieve a purpose of reducing energy consumption, the same optimization level may output different energy consumption optimization strategies in different iterative optimization. Exemplarily, the optimization indexes of the first optimization level are internal control parameters of the heating and ventilation device. The internal control parameters of the heating and ventilation device may include parameters such as a frequency and a current percentage. Different energy consumption optimization strategies may be generated on the basis of setting combinations of different parameters. Therefore, in order to ensure the comprehensiveness of the optimization process, the computer device may perform a plurality of times of iterative optimization at one optimization level, on such basis, in a case that the check result of the candidate energy consumption optimization strategy output from the target optimization layer fails the check, the method further includes that: an iterative optimization calculation is performed on the corresponding data set on the basis of the optimization model of the target optimization level, and a security and validity check is performed; and in a case where the number of iterative optimization calculations reaches a limit number of iterations and the target energy consumption optimization strategy is not obtained, optimization calculation on the next optimization level of the target optimization level as well as a security and validity check is performed on the basis of a level situation of the target optimization level, or it is determined that the heating and ventilation device is not suitable for the energy consumption optimization.

In the above process, if the target energy consumption optimization strategy is obtained when the number of iterative optimization calculations does not reach the limit number of iterations, the target energy consumption optimization strategy is output, and iterative optimization as well as grading optimization are stopped. When the number of iterative optimization calculations reaches the limit number of iterations, the target energy consumption optimization strategy is still not obtained, then it means that the current optimization level (i.e., the target optimization level) is unable to perform better energy consumption optimization, and in a case where the current optimization level is a non-highest optimization level, optimization calculation on the next optimization level of the current optimization level as well as a security and validity check are performed. In a case where the current optimization level is a highest optimization level, it is determined that the heating and ventilation device is not suitable for energy consumption optimization. It needs to be noted that the value of the above limit number of iterations may be set on the basis of actual needs, and settings of the limit number of iterations corresponding to different optimization levels may be the same or different, which is not limited in the present application.

In summary, in the energy consumption grading optimization method provided by the embodiment of the present application, the target operation data related to the energy consumption optimization is acquired, data grading is performed on the target operation data to obtain the data sets of the optimization levels corresponding to different optimization indexes, after the initial optimization level is determined on the basis of the device operation mechanism and the current state grading optimization calculation is performed by using the initial optimization level of each optimization level as the optimization starting point and on the basis of the optimization models of the optimization levels and the data sets of the optimization levels so as to obtain the target energy consumption optimization strategy that meets current actual needs, and the energy consumption of the heating and ventilation device is optimized on the basis of the target energy consumption optimization strategy. Through the above method, the initial optimization level adapted to the device operation mechanism and the current state can be determined, so as to perform grading optimization on the basis of the initial optimization level as the grading optimization starting point to formulate the energy consumption optimization strategy, unnecessary optimization processes can be avoided, and the optimization efficiency is improved. In addition, the practicality of the energy consumption optimization strategy is improved because the obtained target energy consumption optimization strategy is adapted to the current state and the device operation mechanism.

In the process of performing energy consumption grading optimization, changes in application scenarios or application needs may lead to a situation where the model applied in the formulation of the energy consumption optimization strategy is not applicable to the current application scenario or application needs. At this point, the computer device may retrain the model applied in the formulation of the energy consumption optimization strategy, and then formulate the energy consumption optimization strategy on the basis of a retrained model to improve the usability of the energy consumption optimization strategy. Thus, the method further includes the following steps.

At Step 209, upon determining that a model retraining condition is met, historical operation data is merged with the target operation data to form a sample set.

The energy consumption grading optimization method provided in the present application involves the applications of the optimization models of the optimization levels as well as the security and validity check model. In order to improve the accuracy of the energy consumption grading optimization, the optimization models of the optimization levels as well as the security and validity check model need to be retrained upon meeting the model retraining condition. In one possible implementation, the computer device may judge whether the model retraining condition is met after acquiring the target operation data related to the energy consumption optimization. Or, in another possible implementation, the computer device may also judge whether model retraining is needed on the basis of a preset judgment period, which is not limited in the present application.

As an example, the computer device judges whether the condition for model retraining is met after acquiring the target operation data related to energy consumption optimization, in this case, after acquiring the target operation data, the computer device needs to first judge whether the model involved in the process of energy consumption optimization needs to be retrained before formulating the energy consumption optimization strategy on the basis of the target operation data. If it is determined that the condition for model retraining is met, the process of model retraining is performed, then the energy consumption optimization strategy is formulated on the basis of the target operation data via the retrained model. If it is determined that the condition for model retraining is not met, the energy consumption optimization strategy may be formulated on the basis of the target operation data via the current model.

The model retraining condition may include at least one of the following: a current time reaches a preset training time, or the number of acquired strategy application negative feedback reaches a number threshold.

In one embodiment, the computer device may also acquire strategy application feedback while acquiring the target operation data. The strategy application feedback may be strategy application positive feedback, or may be strategy application negative feedback. The computer device may count the number of strategy application negative feedback. When it is determined tahat the number of the acquired strategy application negative feedback reaches the number threshold, it means that an energy consumption optimization effect of the energy consumption optimization strategy formulated by the current model is poor, and cannot meet actual needs, and it is determined that the model needs to be retrained. The number of the acquired strategy application negative feedback may be the number of strategy application negative feedback obtained cumulatively over a period of time, or the number of strategy application negative feedback obtained consecutively.

Since the strategy formulated by the current model is no longer applicable to the actual needs, and the model which is trained by only historical operation data may also be more applicable to the previous state but not to the current needs, and thus, when model retraining is performed, the target operation data is merged with the historical operation data to form a sample set for model training.

At Step 210, data grading is performed on sample data in the sample set to obtain a sample data set applied to a security and validity check model and a sample data set applied to the control strategy grading optimization model. The sample data set applied to the security and validity check model includes a sample data subset applied to an energy consumption validity check model, a sample data subset applied to a cooling capacity security check model, and a sample data subset applied to a state security check. The sample data set applied to the control strategy grading optimization model includes sample data subsets applied to the optimization models of the optimization levels.

In the embodiment of the present application, the models are trained respectively, and different models correspond to different sample data subsets. The sample data subsets corresponding to the models are obtained by performing data grading on the sample data in the sample set. This process may be implemented as following.

Data grading cleaning, data grading check, index grading fusion, index grading extraction, and index grading division are performed on sample data in the sample set to obtain the sample data set applied to the security and validity check model and the sample data set applied to the control strategy grading optimization model.

The sample data set applied to the security and validity check includes a sample data subset applied to an energy consumption validity check model, a sample data subset applied to a cooling capacity security check model, and a sample data subset applied to a state security check. The data set applied to the control strategy grading optimization model includes the sample data subsets applied to the optimization models of the optimization levels. Exemplarily, the sample data set applied to the security and validity check may be represented as {Data_E, Data_C, Data_S}, where Data_E represents a sample data subset applied to the energy consumption validity check model, Data_C represents a sample data subset applied to the cooling capacity security check model, and Data_S represents the sample data subset applied to the state security check model. The sample data set applied to the control strategy grading optimization model may be represented as {Data_01, Data_02, Data_03}, where Data_01 represents the sample data subset applied to the first optimization level, Data_02 represents the sample data subset applied to the second optimization level, and Data_03 represents the sample data subset applied to the third optimization level.

Relevant contents of processing modes in the data grading refer to corresponding contents in step 202 and will not be repeated here.

At Step 211, model training is performed on the security and validity check model on the basis of the sample data set applied to the security and validity check model, and model training is performed on the control strategy grading optimization model on the basis of the sample data set applied to the control strategy grading optimization model.

The process of performing model training on the security and validity check model on the basis of the sample data set applied to the security and validity check model may be implemented as following.

Deep learning training is performed on the energy consumption validity check model on the basis of the sample data subset applied to the energy consumption validity check model to obtain a retrained energy consumption validity check model; deep learning training is performed on the cooling capacity security check model on the basis of the sample data subset applied to the cooling capacity security check model to obtain a retrained cooling capacity security check model; and deep learning training is performed on the state security check model on the basis of the sample data subset applied to the state security check model to obtain a retrained state security check model.

In one possible implementation, the computer device may utilize a neural network to establish a corresponding model, e.g., a neural network such as a deep neural network (DNN) or a long short-term memory (LSTM). Exemplarily, the computer device may utilize the DNN to establish the energy consumption validity check model and the cooling capacity security check model, and utilize the LSTM to establish the state security check model. It needs to be noted that the establishment of the above models is only exemplary, and the present application does not limit the type of the neural network on which the establishment of the models is based.

Taking an example of utilizing the DNN to establish the energy consumption validity check model as well as the cooling capacity security check model, and utilizing the LSTM to establish the state security check model, loss functions used in the training process of the above three models may be expressed as:

$$\text{Model\_}E \sim \{\min(y_{pue} - f_{DNN}(x_{Data\_E}))^2\}$$

$$\text{Model\_}C \sim \{\min(y_{\text{cooling}} - f_{DNN}(x_{Data\_C}))^2\}$$

$$\text{Model\_}S \sim \{\min(y_{state} - f_{LSTM}(x_{Data\_S}))^2\}$$

**where** Model_E represents the energy consumption validity check model, Model_C represents the cooling capacity security check model, and Model_S represents the state security check model; $x_{Data\_E}$, $x_{Data\_C}$, and $x_{Data\_S}$ respectively represent input data of the corresponding models, and $y_{pue}$, $y_{cooling}$, and $y_{state}$ respectively represent power usage effectiveness, a cooling capacity, and a state security parameter of the corresponding input data. Exemplarily, the state security parameter may be a temperature of inlet and return air or inlet and return water, a pressure of the inlet and return air or the inlet and return water, etc. The above input data as well as the value of y are stored correspondingly in the data set, so as to update the model parameters during model training via a difference between the value of y and a predicted value of y obtained by the model on the basis of the input data, thus achieving model training and improving the accuracy of the model. When the security and validity check model is applied, the parameters corresponding to the candidate optimization strategy determined by the control strategy grading optimization model are correspondingly input into the models of the security and validity check model so as to obtain the corresponding sub-check results output by the models.

The process of performing the model training on the control strategy grading optimization model on the basis of the sample data set applied to the control strategy grading optimization may be implemented as following.

An optimization model of the first optimization level is trained by means of combined traversal on the basis of a sample data subset of the first optimization level and an index parameter constraint range of the first optimization level, and the optimization model of the first optimization level is tested via the retrained security and validity check model, to obtain a retrained optimization model of the first optimization level; an optimization model of the second optimization level is trained by means of Bayesian optimization on the basis of a sample data subset of the second optimization level and an index parameter constraint range of the second optimization level, and the optimization model of the second optimization level is tested via the retrained security and validity check model, to obtain a retrained optimization model of the second optimization level; and an optimization model of the third optimization level is trained by means of reinforcement learning on the basis of a sample data subset of the third optimization level and an index parameter constraint range of the third optimization level, and the optimization model of the third optimization level is tested via the retrained security and validity check model, to obtain a retrained optimization model of the third optimization level.

In the embodiment of the present application, in order to improve the effect of retraining the optimization model, the computer device may first retrain the security and validity check model so as to test the optimization model via the retrained security and validity check model to obtain the retrained optimization model. For any optimization model, testing the optimization model via the retrained security and validity check model may refer to that a security and validity check is performed on the parameters in the energy consumption optimization strategy obtained by the optimization model on the basis of the corresponding sample data subset via the retrained security and validity check model, and determining that the optimization model passes the test when the check result indicates that the check is passed, so as to obtain a retrained optimization model.

In the above training process of the optimization model, for any optimization level, a group of parameter data combinations in the sample data subset corresponding to the optimization level is input into the optimization model, a predicted parameter data combination (i.e., the parameters in the energy consumption optimization strategy predicted by the optimization model) is obtained via the optimization model. If the parameter data in the predicted parameter data combination is in the index parameter constraint range of the optimization level, the security and validity check is performed on the predicted parameter data combination via the retrained security and validity check model. Moreover, when the check result indicates a pass, the above process is performed by the next group of parameter data combinations in the sample data subset until a training completion condition is met, and the retrained optimization model is obtained. The training completion condition may refer to the completion of iterative training of all parameter data combinations of the sample data subset, or the number of times the trained optimization model passes the test of the retrained security and validity check model is greater than a number threshold, etc.

If there is parameter data in the predicted parameter data combination not falling within the index parameter constraint range of the optimization level, or the check result indicates that the check is not passed, the model parameters of the optimization model are optimized, the process of acquiring the predicted parameter data combination is performed once again, and the subsequent process is performed until a retrained optimization model is obtained.

In the embodiment of the present application, the index parameter constraint range of each optimization level is used to indicate an optimization space of the corresponding optimization index. Exemplarily, if the constraint range of a frequency is 50 Hz-100 Hz, then a predicted frequency in the predicted parameter data combination obtained by the optimization model needs to be in a range of 50 Hz-100 Hz. If the predicted frequency exceeds the range, it means that the optimization result of the optimization model is unreasonable, and model training needs to be performed again.

At Step 212, grading optimization calculation is performed on the basis of the retrained control strategy grading optimization model, and a security and validity check is performed on the basis of the retrained security and validity check model.

After completing retraining of the models, the process of formulating the energy consumption grading optimization strategy is performed on the basis of the retrained models.

By instantly updating the models used in the process of energy consumption grading optimization, the energy consumption optimization strategy obtained on the basis of model processing may be more in line with the current actual needs, thus improving the adaptability of the energy consumption optimization strategy.

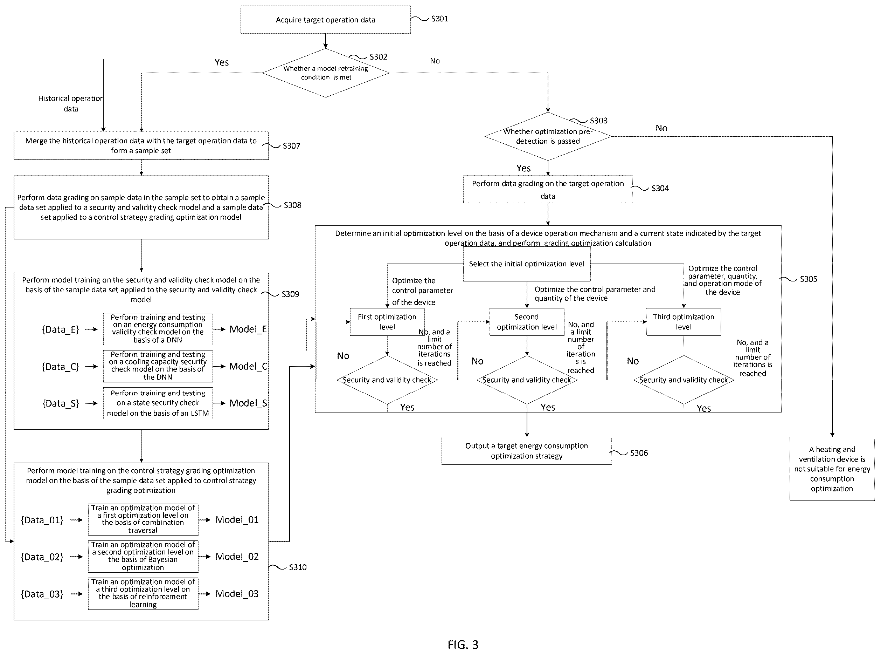

On the basis of the contents of the embodiments shown in FIG. 2, taking the process in which the computer device judges whether the model retraining condition is met after acquiring the target operation data related to energy consumption optimization, and a provision of three optimization levels as an example, FIG. 3 shows a flowchart of an energy consumption grading optimization method provided by an exemplary embodiment of the present application. The method may be performed by a computer device. The computer device may be implemented as a management device of a heating and ventilation device. As shown in FIG. 3, the energy consumption grading optimization method may include the following steps.

At Step S301, target operation data is acquired.

At Step S302, whether a model retraining condition is met is judged, if not, step S303 is performed, and otherwise, step S307 is performed.

The model retraining condition may include at least one of the following: a current time reaches a preset training time, or the number of acquired strategy application negative feedback reaches a number threshold. When t the model retraining condition includes a judgment on the number of negative feedback, the computer device may acquire strategy application feedback while acquiring the target operation data.

At Step S303, whether the target operation data passes optimization pre-detection is judged, if yes, S304 is performed, and otherwise, it is determined that the heating and ventilation device is not suitable for energy consumption optimization.

At Step S304, data grading is performed on the target operation data.

The process may refer to the relevant contents in the embodiments shown in FIG. 2 and will not be repeated here.

At Step S305, an initial optimization level is determined on the basis of a device operation mechanism and a current state indicated by the target operation data, and grading optimization calculation is performed.

The process may refer to the relevant contents in the embodiments shown in FIG. 2 and will not be repeated here.

At Step S306, a target energy consumption optimization strategy is output.

At Step S307, historical operation data is merged with the target operation data to form a sample set.

At Step 308, data grading is performed on sample data in the sample set to obtain a sample data set applied to a security and validity check model and a sample data set applied to a control strategy grading optimization model.

At Step 309, model training is performed on the security and validity check model on the basis of the sample data set applied to the security and validity check model.

At Step 310, model training is performed on the control strategy grading optimization model on the basis of the sample data set applied to the control strategy grading optimization.

After obtaining the retrained security and validity check model and the retrained control strategy grading optimization model, step S305 is performed to obtain a target energy consumption optimization strategy for the target operation data.

The implementation of the above process may refer to the relevant contents of the embodiments of FIG. 2 and will not be repeated here.

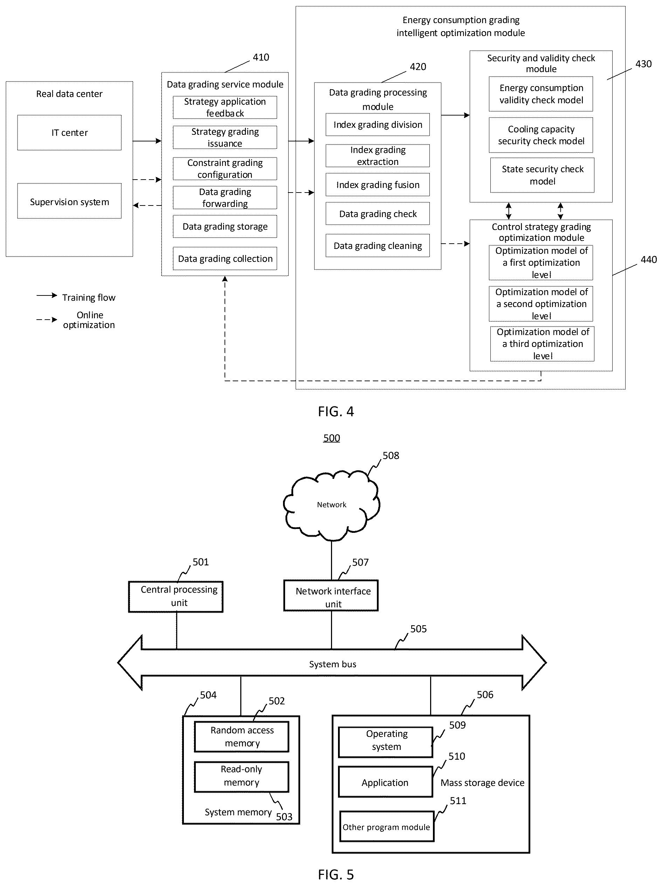

FIG. 4 shows a schematic diagram of an energy consumption grading optimization system provided by an exemplary embodiment of the present application. The system is configured to perform all or part of the steps of the embodiments shown in FIG. 1, FIG. 2, or FIG. 3 to obtain a target energy consumption optimization strategy. As shown in FIG. 4, the energy consumption grading optimization system may include a data grading service module 410, a data grading processing module 420, a security and validity check module 430, and a control strategy grading optimization module 440. The data grading processing module 420, the security and validity check module 430, and the control strategy grading optimization module 440 form an energy consumption grading intelligent optimization module.

The data grading service module 410 is configured to acquire target operation data. The data grading service module may serve as an intermediary between a real data center and the energy consumption grading intelligent optimization module that performs energy consumption grading optimization. The data grading service module, on the one hand, may collect various indoor and outdoor environment data, state data of device operation, setting parameters of device control, control feedback data, a combined operation mode of devices, the operation quantity of devices, load and energy consumption data of an IT center, energy consumption data of a refrigeration device and a power supply, etc., from the real data center. Considering the need for subsequent grading processing, the data grading service module, after acquiring the target operation data, may also perform grading storage, grading forwarding, and constraint grading configuration on the acquired target operation data. On the other hand, the data grading service module is also responsible for issuing the target energy consumption optimization strategy obtained by the energy consumption grading intelligent optimization module to the real data center.

The data grading processing module 420 is configured to perform data grading processing on the input operation data, including data grading cleaning, data grading check, index grading fusion, index grading extraction, and index grading division, to obtain a data set applied to a security and validity check model and a data set applied to a control strategy grading optimization model, and send the corresponding data sets to the security and validity check module 430 and the control strategy grading optimization module 440 respectively.

The security and validity check module 430 may be configured to perform training on the security and validity check model and to perform security and validity verification on the energy consumption optimization strategy via the security and validity check model.

The control strategy grading optimization module 440 may be configured to perform training on the control strategy grading optimization model, as well as to determine an initial optimization level and perform a grading optimization calculation on the basis of optimization models of optimization levels to obtain the target energy consumption optimization strategy.

FIG. 5 shows a structural block diagram of a computer device 500 showed by an exemplary embodiment of the present application. The computer device may be implemented as a management device of the heating and ventilation device in the above solution of the present application. The computer device 500 includes a central processing unit (CPU) 501, a system memory 504 including a random access memory (RAM) 502 and a read-only memory (ROM) 503, and a system bus 505 connecting the system memory 504 and the central processing unit 501. The computer device 500 further includes a mass storage device 506 for storing an operating system 509, an application 510 and other program modules 511.

Without loss of generality, a computer-readable medium may include a computer storage medium and a communication medium. The computer storage medium includes volatile and nonvolatile, removable and non-removable media implemented in any method or technology for storing information, such as a computer-readable instruction, data structure, program module, or other data. The computer storage medium includes a RAM, a ROM, an erasable programmable read only memory (EPROM), an electrically-erasable programmable read-only memory (EEPROM) flash memory, or other solid-state storage technologies, a CD-ROM, a digital versatile disc (DVD), or other optical storage, a tape cartridge, a tape, disk storage, or other magnetic storage devices. Of course, those skilled in the art may know that the computer storage medium is not limited to the above ones. The system memory 504 and the mass storage device 506 above may be collectively referred to as a memory.

According to various embodiments of the present application, the computer device 500 may also be connected to a remote computer on a network for operation via a network such as the Internet. That is, the computer device 500 may be connected to a network 508 via a network interface unit 507 connected to the system bus 505, or, the computer device 500 may also be connected to other types of networks or remote computer systems (not shown) using the network interface unit 507.

The memory further includes at least one instruction, at least one segment of program, a code set, or an instruction set. The at least one instruction, the at least one segment of program, the code set, or the instruction set are stored in the memory. The central processing unit 501 implements all or some of the steps in the energy consumption grading optimization method shown in the various embodiments above by executing the at least one instruction, the at least one segment of program, the code set, or the instruction set.

In an exemplary embodiment, a computer-readable storage medium is further provided. The computer-readable storage medium stores at least one computer program therein. The computer program is loaded and executed by a processor to implement all or some of the steps of the above application interaction method during a call. For example, the computer-readable storage medium may be a read-only memory (ROM), a random-access memory (RAM), a compact disc read-only memory (CD-ROM), a tape, a floppy disk, an optical data storage device, etc.

In an exemplary embodiment, a computer program product is further provided. The computer program product includes at least one computer program that is loaded by a processor and performs all or some of the steps of the energy consumption grading optimization method shown in any one of the embodiments of FIG. 1, FIG. 2, or FIG. 3 above.

Other implementation solutions of the present application will be apparent to those skilled in the art from consideration of the specification and practice of the invention disclosed here. The present application is intended to cover any variation, use, or adaptation of the present application that follows the general principles of the present application and includes common general knowledge or customary technical means in the technical field that are not disclosed in the present application. The specification and embodiments are considered exemplary merely, and the true scope and spirit of the present application are indicated by the claims.

It should be understood that the present application is not limited to the exact construction that has been described above and illustrated in the drawings, and that various modifications and changes may be made without departing from its scope. The scope of the present application is merely limited by the appended claims.

**Claims**

1. An energy consumption grading optimization method, comprising:

acquiring target operation data related to energy consumption optimization;
performing data grading on the target operation data to obtain data sets corresponding to optimization levels, data sets of different optimization levels corresponding to different optimization indexes;
determining an initial optimization level on the basis of a device operation mechanism and a current state indicated by the target operation data; and
performing, by using the initial optimization level as an optimization starting point and on the basis of optimization models of optimization levels and the data sets corresponding to optimization levels, grading optimization calculation to obtain a target energy consumption optimization strategy, so as to optimize energy consumption of a heating and ventilation device on the basis of the target energy consumption optimization strategy.

2. The method according to claim 1, wherein performing, by using the initial optimization level as the optimization starting point and on the basis of the optimization models of optimization levels and the data sets corresponding to optimization levels, grading optimization calculation to obtain the target energy consumption optimization strategy comprises:

performing, in a case of entering a target optimization level, optimization calculation on a corresponding data set via an optimization model of the target optimization level to obtain a candidate energy consumption optimization strategy, wherein the target optimization level is any one of optimization levels where optimization is performed by using the initial optimization level as the optimization starting point;
performing a security and validity check on the candidate energy consumption optimization strategy via a security and validity check model to obtain a check result of the candidate energy consumption optimization strategy; and
determining, in a case where the check result of the candidate energy consumption optimization strategy indicates that the candidate energy consumption optimization strategy passes the check, the candidate energy consumption optimization strategy as the target energy consumption optimization strategy.

3. The method according to claim 2, further comprising:

performing, in a case where the target optimization level is a non-highest optimization level among optimization levels and the check result of the candidate energy consumption optimization strategy indicates that the candidate energy consumption optimization strategy fails to pass the check, optimization calculation on a next optimization level of the target optimization level, and a security and validity check; or
determining, in a case where the target optimization level is a highest optimization level among optimization levels and the check result of the candidate energy consumption optimization strategy indicates that the candidate energy consumption optimization strategy fails to pass the check, that the heating and ventilation device is not suitable for energy consumption optimization.

4. The method according to claim 3, wherein in a case where the check result of the candidate energy consumption optimization strategy indicates that the candidate energy consumption optimization strategy fails to pass the check, the method further comprises:

performing iterative optimization calculation on a corresponding data set on the basis of the optimization model of the target optimization level, and a security and validity check; and performing, in a case where a number of iterative optimization calculations reaches a limit number of iterations and the target energy consumption optimization strategy is not obtained, optimization calculation on the next optimization level of the target optimization level on the basis of a level situation of the target optimization level and a security and validity check, or determining that the heating and ventilation device is not suitable for energy consumption optimization.

5. The method according to claim 1, wherein the target operation data comprises indoor-and-outdoor temperature and humidity and an information technology called IT load change situation; and determining the initial optimization level on the basis of the device operation mechanism and the current state indicated by the target operation data comprises:

determining, in a case where the outdoor temperature is within a preset outdoor temperature range, indoor-and-outdoor temperature and humidity changes periodically and an IT load changes periodically, the initial optimization level to be a first optimization level, wherein the first optimization level indicates that optimization is performed on an internal control parameter of the heating and ventilation device;
determining, in a case where the outdoor temperature is within the outdoor temperature range, and the indoor-and-outdoor temperature and humidity has a sudden change or the IT load has a sudden change, the initial optimization level to be a second optimization level, wherein the second optimization level indicates that optimization is performed on an operation quantity of the heating and ventilation device and an internal control parameter of the heating and ventilation device; or
determining, in a case where the outdoor temperature is in a temperature critical range between different outdoor temperature ranges, the initial optimization level to be a third optimization level, wherein the third optimization level indicates that optimization is performed on an operation mode of the heating and ventilation device, an operation quantity of the heating and ventilation device and an internal control parameter of the heating and ventilation device.

6. The method according to claim 1, wherein performing data grading on the target operation data to obtain the data sets corresponding to optimization levels comprises:

performing data grading cleaning, data grading check, index grading fusion, index grading extraction, and index grading division on the target operation data to obtain a data set applied to a security and validity check model; wherein a control strategy grading optimization model comprises optimization models of different optimization levels; and a data set applied to the control strategy grading optimization model comprises data subsets applied to the optimization models of different optimization levels; wherein the data grading check is used to check correctness of pieces of sample data; the index grading fusion is used to perform data statistics on relevant indexes to generate a new index; the index grading extraction is used to extract index sets required by different models to form corresponding data subsets; and the index grading division is used for divide different indexes by type.

7. The method according to claim 2, wherein the security and validity check model comprises an energy consumption validity check model, a cooling capacity security check model, and a state security check model; and performing the security and validity check on the energy consumption optimization strategy obtained by the optimization model via the security and validity check model comprises:

performing an energy consumption validity check on the energy consumption optimization strategy via the energy consumption validity check model to obtain a first sub-check result;
performing a cooling capacity security check on the energy consumption optimization strategy via the cooling capacity security check model to obtain a second sub-check result;
performing a state security check on the energy consumption optimization strategy via the state security check model to obtain a third sub-check result; and
generating a check result on the basis of the first sub-check result, the second sub-check result, and the third sub-check result, wherein the check result indicates that the energy consumption optimization strategy passes check or fails to pass check.

8. The method according to claim 1, further comprising:

merging, upon determining that a model retraining condition is met, historical operation data with the target operation data to form a sample set;

performing data grading on sample data in the sample set to obtain a sample data set applied to a security and validity check model and a sample data set applied to a control strategy grading optimization model; wherein the sample data set applied to the security and validity check model comprises a sample data subset applied to an energy consumption validity check model, a sample data subset applied to a cooling capacity security check model, and a sample data subset applied to a state security check; and the sample data set applied to the control strategy grading optimization model comprises sample data subsets applied to the optimization models of the optimization levels;

performing model training on the security and validity check model on the basis of the sample data set applied to the security and validity check model, and performing model training on the control strategy grading optimization model on the basis of the sample data set applied to the control strategy grading optimization model; and

performing grading optimization calculation on the basis of a retrained control strategy grading optimization model, and performing a security and validity check on the basis of a retrained security and validity check model.

9. The method according to claim 8, wherein performing model training on the security and validity check model on the basis of the sample data set applied to the security and validity check model comprises:

performing deep learning training on the energy consumption validity check model on the basis of the sample data subset applied to the energy consumption validity check model to obtain a retrained energy consumption validity check model;

performing deep learning training on the cooling capacity security check model on the basis of the sample data subset applied to the cooling capacity security check model to obtain a retrained cooling capacity security check model; and

performing deep learning training on the state security check model on the basis of the sample data subset applied to the state security check model to obtain a retrained state security check model.

10. The method according to claim 8, wherein performing the model training on the control strategy grading optimization model on the basis of the sample data set applied to the control strategy grading optimization model comprises:

training an optimization model of a first optimization level by means of combined traversal on the basis of a sample data subset of the first optimization level and an index parameter constraint range of the first optimization level, and testing the optimization model of the first optimization level via the retrained security and validity check model, to obtain a retrained optimization model of the first optimization level;

training an optimization model of a second optimization level by means of Bayesian optimization on the basis of a sample data subset of the second optimization level and an index parameter constraint range of the second optimization level, and testing the optimization model of the second optimization level via the retrained security and validity check model, to obtain a retrained optimization model of the second optimization level; and

training an optimization model of a third optimization level by means of reinforcement learning on the basis of a sample data subset of the third optimization level and an index parameter constraint range of the third optimization level, and testing the optimization model of the third optimization level via the retrained security and validity check model, to obtain a retrained optimization model of the third optimization level.

11. The method according to claim 8, wherein the model retraining condition comprises at least one of the following: a current time reaches a preset training time, or a number of acquired strategy application negative feedback reaches a number threshold.

12. The method according to claim 1, wherein prior to performing data grading on the target operation data to obtain the data sets corresponding to optimization levels, the method further comprises:

performing optimization pre-detection on the target operation data via an optimization pre-detection index to obtain an optimization pre-detection result; wherein the optimization pre-detection index comprises at least one of the following: detecting whether indexes needed by the models are missing, or checking whether a business relationship between the indexes is valid; and

performing data grading on the target operation data to obtain the data sets corresponding to optimization levels comprises:

performing, in a case where the optimization pre-detection result indicates that the target operation data passes pre-detection, data grading on the target operation data to obtain the data sets corresponding to the optimization levels.

13. The method according to claim 12, further comprising:

   determining, in a case where the optimization pre-detection result indicates that the target operation data fails to pass pre-detection, that the heating and ventilation device is not suitable for energy consumption optimization.

14. A computer device, comprising a processor and a memory, wherein the memory stores at least one computer program, and the at least one computer program is loaded and executed by the processor to implement the energy consumption grading optimization method according to any one of claims 1 to 13.

15. A computer-readable storage medium, storing at least one computer program therein, wherein the computer program is loaded and executed by a processor to implement the energy consumption grading optimization method according to any one of claims 1 to 13.

Acquire target operation data related to energy consumption optimization ⟶ 110

Perform data grading on the target operation data to obtain data sets corresponding to optimization levels, wherein data sets of different optimization levels correspond to different optimization indexes ⟶ 120

Determine an initial optimization level on the basis of a device operation mechanism and a current state indicated by the target operation data ⟶ 130

Perform, by using the initial optimization level as an optimization starting point and on the basis of optimization models of optimization levels and the data sets corresponding to the optimization levels, grading optimization calculation to obtain a target energy consumption optimization strategy, so as to optimize energy consumption of a heating and ventilation device on the basis of the target energy consumption optimization strategy ⟶ 140

FIG. 1

Acquire target operation data related to energy consumption optimization ⟶ 201

Perform data grading on the target operation data to obtain data sets corresponding to optimization levels, wherein data sets of different optimization levels correspond to different optimization indexes ⟶ 202

Determine an initial optimization level on the basis of a device operation mechanism and a current state indicated by the target operation data ⟶ 203

Perform, in a case of entering a target optimization level, optimization calculation on a corresponding data set via an optimization model of the target optimization level to obtain a candidate energy consumption optimization strategy, wherein the target optimization level is any one of optimization levels where optimization is performed by using the initial optimization level as the optimization starting point ⟶ 204

Perform a security and validity check on the candidate energy consumption optimization strategy via a security and validity check model to obtain a check result of the candidate energy consumption optimization strategy ⟶ 205

Determine the candidate energy consumption optimization strategy as a target energy consumption optimization strategy if the check result of the candidate energy consumption optimization strategy indicates that the candidate energy consumption optimization strategy passes the check, ⟶ 206

Perform optimization calculation on a next optimization level of the target optimization level as well as a security and validity check in a case where the target optimization level is a non-highest optimization level among the optimization levels and the check result of the candidate energy consumption optimization strategy indicates that the candidate energy consumption optimization strategy fails To pass the check ⟶ 207

Determine that a heating and ventilation device is not suitable for energy consumption optimization in a case where the target optimization level is a highest optimization level among the optimization levels and the check result of the candidate energy consumption optimization strategy indicates that the candidate energy consumption optimization strategy fails to pass the check ⟶ 208

FIG. 2

Acquire target operation data — S301

Whether a model retraining condition is met — S302

Yes / No

Historical operation data

Merge the historical operation data with the target operation data to form a sample set — S307

Whether optimization pre-detection is passed — S303

No

Yes

Perform data grading on the target operation data — S304

Perform data grading on sample data in the sample set to obtain a sample data set applied to a security and validity check model and a sample data set applied to a control strategy grading optimization model — S308

Determine an initial optimization level on the basis of a device operation mechanism and a current state indicated by the target operation data, and perform grading optimization calculation — S305

Select the initial optimization level

Perform model training on the security and validity check model on the basis of the sample data set applied to the security and validity check model — S309

Optimize the control parameter of the device

Optimize the control parameter and quantity of the device

Optimize the control parameter, quantity, and operation mode of the device

{Data_E} → Perform training and testing on an energy consumption validity check model on the basis of a DNN → Model_E

{Data_C} → Perform training and testing on a cooling capacity security check model on the basis of the DNN → Model_C

{Data_S} → Perform training and testing on a state security check model on the basis of an LSTM → Model_S

First optimization level

No, and a limit number of iterations is reached

Second optimization level

No, and a limit number of iterations is reached

Third optimization level

No, and a limit number of iterations is reached

No — Security and validity check — Yes

No — Security and validity check — Yes

No — Security and validity check — Yes

Output a target energy consumption optimization strategy — S306

A heating and ventilation device is not suitable for energy consumption optimization

Perform model training on the control strategy grading optimization model on the basis of the sample data set applied to control strategy grading optimization

{Data_01} → Train an optimization model of a first optimization level on the basis of combination traversal → Model_01

{Data_02} → Train an optimization model of a second optimization level on the basis of Bayesian optimization → Model_02 — S310

{Data_03} → Train an optimization model of a third optimization level on the basis of reinforcement learning → Model_03

FIG. 3

FIG. 4

FIG. 5

## INTERNATIONAL SEARCH REPORT

| International application No. |
| --- |
| **PCT/CN2024/103165** |

### A. CLASSIFICATION OF SUBJECT MATTER

G06Q10/04(2023.01)i; F24F11/00(2018.01)i

According to International Patent Classification (IPC) or to both national classification and IPC

### B. FIELDS SEARCHED

Minimum documentation searched (classification system followed by classification symbols)

IPC: G06F F24F

Documentation searched other than minimum documentation to the extent that such documents are included in the fields searched

Electronic data base consulted during the international search (name of data base and, where practicable, search terms used)

CNKI, IEEE, CNABS, VEN, CNTXT, WOTXT, EPTXT, USTXT: 能耗, 功耗, 节能, 能源, 优化, 层级, 分层, 校验, 验证, 环境, 温度, 气温, 气候, 负载, energy, consumption, save, optimization, layer, check, verification, environment, circumstance, temperature, load

### C. DOCUMENTS CONSIDERED TO BE RELEVANT

| Category* | Citation of document, with indication, where appropriate, of the relevant passages | Relevant to claim No. |
| --- | --- | --- |
| X | US 2017219233 A1 (NEC LABORATORIES AMERICA, INC.) 03 August 2017 (2017-08-03) <br> description, paragraphs 28-75 | 1, 12-15 |
| A | CN 116227704 A (CHANGZHOU ENGIPOWER TECHNOLOGY CO., LTD.) 06 June 2023 (2023-06-06) <br> entire document | 1-15 |
| A | CN 114357412 A (LU ZHENXING) 15 April 2022 (2022-04-15) <br> entire document | 1-15 |
| A | WO 2023030522 A1 (CHINA MOBILE GROUP DESIGN INSTITUTE CO., LTD. et al.) 09 March 2023 (2023-03-09) <br> entire document | 1-15 |
| A | WO 2023093820 A1 (ALIBABA CLOUD COMPUTING LTD.) 01 June 2023 (2023-06-01) <br> entire document | 1-15 |
| A | US 2021352831 A1 (ABB SCHWEIZ AG) 11 November 2021 (2021-11-11) <br> entire document | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 September 2024** | **24 September 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103165**

| Patent document cited in search report | | | Publication date (day/month/year) | Patent family member(s) | | | Publication date (day/month/year) |
|---|---|---|---|---|---|---|---|
| US | 2017219233 | A1 | 03 August 2017 | None | | | |
| CN | 116227704 | A | 06 June 2023 | None | | | |
| CN | 114357412 | A | 15 April 2022 | None | | | |
| WO | 2023030522 | A1 | 09 March 2023 | CN | 115776795 | A | 10 March 2023 |
| WO | 2023093820 | A1 | 01 June 2023 | HK | 40064622 | A1 | 25 November 2022 |
| | | | | CN | 113835344 | A | 24 December 2021 |
| US | 2021352831 | A1 | 11 November 2021 | EP | 3612011 | A1 | 19 February 2020 |
| | | | | EP | 3837931 | A1 | 23 June 2021 |
| | | | | WO | 2020035471 | A1 | 20 February 2020 |
| | | | | US | 11785749 | B2 | 10 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310820243